# FASCICULE DE BREVET EUROPEEN

(11) **EP 1 778 455 B1**
(45) Date de publication et mention de la délivrance du brevet: **19.09.2007**
(21) Numéro de dépôt: 05775252.9
(22) Date de dépôt: 07.06.2005
(51) Int. Cl.: B29C 49/66, B29C 49/64, B29C 49/78, B29C 49/06

(54) **PROCEDE ET INSTALLATION DE FABRICATION DE RECIPIENTS**
VERFAHREN UND ANLAGE ZUR BEHÄLTERHERSTELLUNG
METHOD AND INSTALLATION FOR THE PRODUCTION OF CONTAINERS

(30) Priorité: 08.06.2004 FR 0406188
(43) Date de publication de la demande: 02.05.2007
(73) Titulaire: SIDEL PARTICIPATIONS, 76930 Octeville-sur-Mer (FR)
(72) Inventeur: TROUILLET Mickael, c/o Sidel Participations, F-76930 Octeville sur Mer (FR)
(74) Mandataire: Gorrée, Jean-Michel
(86) Numéro de dépôt international: PCT/FR2005/001399
(87) Numéro de publication internationale: WO 2006/003304

(56) Documents cités:
- FR-A1- 2 828 829
- US-A- 3 870 452
- US-A- 4 091 059
- US-A- 5 498 390
- US-A1- 2002 076 462
- PATENT ABSTRACTS OF JAPAN vol. 2000, no. 02, 29 février 2000 (2000-02-29) & JP 11 314269 A (TOYO SEIKAN KAISHA LTD), 16 novembre 1999 (1999-11-16)
- PATENT ABSTRACTS OF JAPAN vol. 1997, no. 07, 31 juillet 1997 (1997-07-31) & JP 09 085817 A (SHOWA DENKO KK), 31 mars 1997 (1997-03-31)

## Description

L'invention a trait à la fabrication des récipients.

Elle concerne plus particulièrement un procédé, ainsi qu'une installation, pour la fabrication des récipients - notamment des bouteilles - à partir de préformes en matière thermoplastique.

Un tel procédé comporte généralement une première étape lors de laquelle les préformes sont chauffées au défilé dans un four-tunnel puis une seconde étape, pour le formage proprement dit, au cours de laquelle les préformes chaudes sont introduites dans un dispositif de soufflage ou d'étirage-soufflage pour être conformées en récipients. L'étape de chauffage des préformes consiste à porter leur matière thermoplastique constitutive, ou tout au moins la température de la matière thermoplastique de leurs zones devant être modifiées pour obtenir les récipients, à une température excédant la température de transition vitreuse, c'est-à-dire la température de ramollissement de ladite matière. Ainsi, à titre d'exemple, lorsque les récipients à produire sont en PET, pour lequel la température de transition est de l'ordre de 80°C, la température à laquelle la matière est portée est de l'ordre de 120°C-140°.

En sortie de l'unité de formage (c'est-à-dire, en pratique, en sortie du dispositif de soufflage ou d'étirage-soufflage), les récipients ainsi formés seront dirigés soit vers une unité de stockage dans l'attente d'être remplis ultérieurement, soit directement vers une unité de remplissage.

Quoi qu'il en soit, en sortie de l'unité de formage, les récipients peuvent, au moins localement dans certaines zones, rester à une température à laquelle la matière thermoplastique n'a pas recouvré une rigidité suffisante pour permettre au récipient de conserver dans la zone concernée la forme qui lui a été donnée lors du formage.

Cet état affecte particulièrement le fond des récipients, qui est en général plus épais que leur corps, et tend, de ce fait, à se refroidir plus lentement que le corps et à rester momentanément mou en sortie de l'unité de formage.

C'est pourquoi il apparaît nécessaire, immédiatement après leur formage, de refroidir les récipients afin de fixer la forme qui leur a été donnée, voir demande de brevet français FR-A1-2 828 829. A titre d'exemple, les récipients en PET, initialement conformés à une température supérieure à 80°C, doivent être rapportés à une température inférieure à 70°C (de préférence de l'ordre de 60°C).

Il est connu de la demande de brevet français FR-2 732 002, ou de son équivalent américain US-5 996 322 de refroidir les récipients par soufflage d'air frais (c'est-à-dire à une température égale ou inférieure à la température ambiante).

Si cette méthode est satisfaisante pour des récipients de forme simple, offrant peu d'obstacles à la circulation de l'air ou du gaz, son efficacité se révèle toutefois insuffisante pour des récipients aux formes complexes, tels que les bouteilles à fond pétaloïde. En l'occurrence, le transfert de chaleur n'est pas suffisamment rapide pour éviter une déformation du fond, même minime. Cette lenteur du refroidissement grève les cadences de productions.

Il a également été proposé de refroidir les récipients au moyen d'un brumisateur projetant sur les récipients un brouillard composé d'air chargé de gouttelettes d'eau.

Si une telle solution permet effectivement d'obtenir un transfert de chaleur plus rapide que le simple refroidissement par air décrit ci-dessus, et par conséquent d'opérer un refroidissement plus efficace des récipients, elle présente toutefois certains inconvénients.

D'une part, le brouillard s'avère difficile à diriger, de sorte que c'est l'ensemble des récipients, et non seulement les zones instables, qui sont aspergés. Il en résulte un rendement insuffisant de l'unité de refroidissement, qui se traduit notamment par une surconsommation d'eau.

D'autre part, l'eau qui n'a pas été vaporisée au contact des zones chaudes du récipient a tendance à se déposer et à s'accumuler dans des zones hors desquelles il faut l'évacuer.

L'invention vise notamment à remédier aux inconvénients précités, en proposant un procédé et une installation de fabrication de récipients, qui permettent, de manière simple et économique, de refroidir efficacement les récipients et permettent in fine d'accroître les cadences de production.

A cet effet, l'invention propose, suivant un premier aspect, un procédé de fabrication de récipients, selon la revendication 1.

Les inventeurs ont constaté une grande efficacité de refroidissement, compte tenu notamment de la finesse des particules qui, au contact des récipients, ont tendance à s'évaporer complètement, ce changement de phase étant accompagné d'un important transfert de chaleur.

Suivant un second aspect, l'invention propose une installation de fabrication de récipients, selon la revendication 6.

D'autres modes de réalisation de l'invention sont l'objet des revendications dépendantes 2 à 5 et 7 à 15.

D'autres objets et avantages de l'invention apparaîtront à la lumière de la description faite ci-après en référence aux dessins annexés dans lesquels :
- la figure 1 est une vue schématique en plan de dessus montrant une installation conforme à l'invention ;
- la figure 2 est une vue en plan de dessus illustrant un détail de l'installation de la figure 1, selon l'encart II ;
- la figure 3 est une vue d'élévation en coupe partielle, illustrant l'unité de refroidissement de l'installation de la figure 1 ;
- la figure 4 est une vue d'élévation en coupe partielle de côté illustrant l'unité de refroidissement de la figure 3, suivant un angle de vue perpendiculaire ;
- la figure 5 est une vue en plan de dessus illustrant un masque d'une unité de refroidissement telle que représentée sur les figures 3 et 4 ;
- la figure 6 est un diagramme schématique de l'unité de refroidissement de la figure 3.

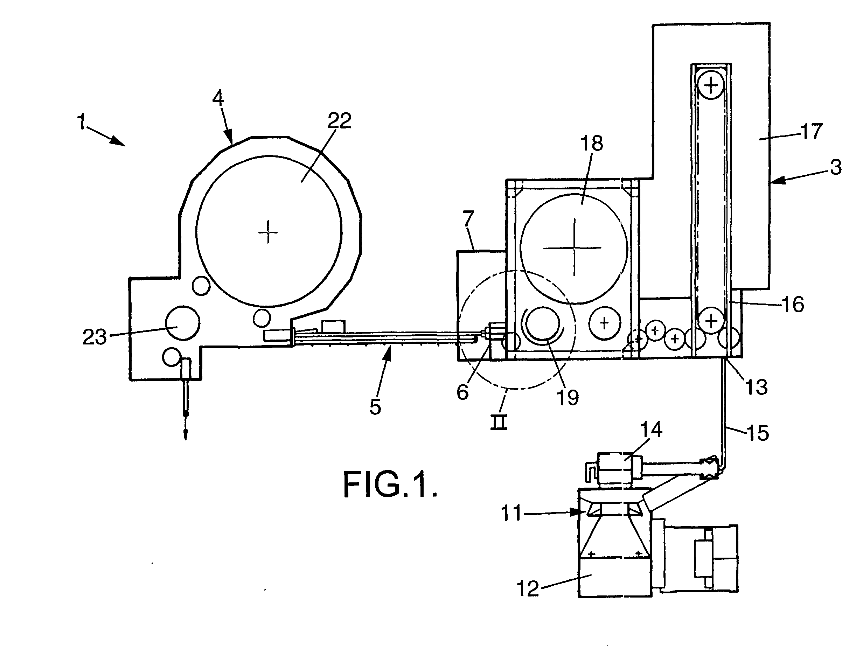

Sur la figure 1 est représentée une installation 1 de fabrication de récipients 2 tels que des bouteilles, à partir de préformes en matière thermoplastique.

L'installation 1 comporte une unité de formage 3 des récipients 2, une unité de remplissage 4 des récipients 2, un convoyeur 5 pour acheminer les récipients 2 formés depuis la sortie 6 de l'unité de formage 3 vers l'unité de remplissage 4, ainsi qu'une unité de refroidissement 7 placée à la sortie 6 de l'unité de formage 3, sur le trajet des récipients 2, formé par le convoyeur 5.

Les récipients 2 sont par exemple réalisés en polyéthylènetherephtalate (PET), en polyéthylènenaphtalate (PEN), ou toute autre matière thermoplastique appropriée. Une fois formé, chaque récipient 2 présente un corps 8 (qui peut être cylindrique), un col 9 et, à l'opposé du col 9, un fond 10.

L'installation 1 comprend en outre une unité d'alimentation 11 qui fournit les préformes à l'unité de formage 3. L'unité d'alimentation 11 comporte par exemple une trémie 12 dans laquelle sont mises en vrac les préformes, fabriquées préalablement par moulage par injection, cette trémie 12 étant reliée à l'entrée 13 de l'unité de formage 3 par un trieur 14 qui isole et positionne les préformes (froides, c'est-à-dire à température ambiante) sur une glissière 15.

Les préformes sont ensuite montées sur une chaîne 16 de transfert, puis chauffées au défilé dans un four-tunnel 17 avant d'être introduites chaudes dans un dispositif de soufflage ou d'étirage-soufflage du type carrousel 18 à moules multiples (non représentés).

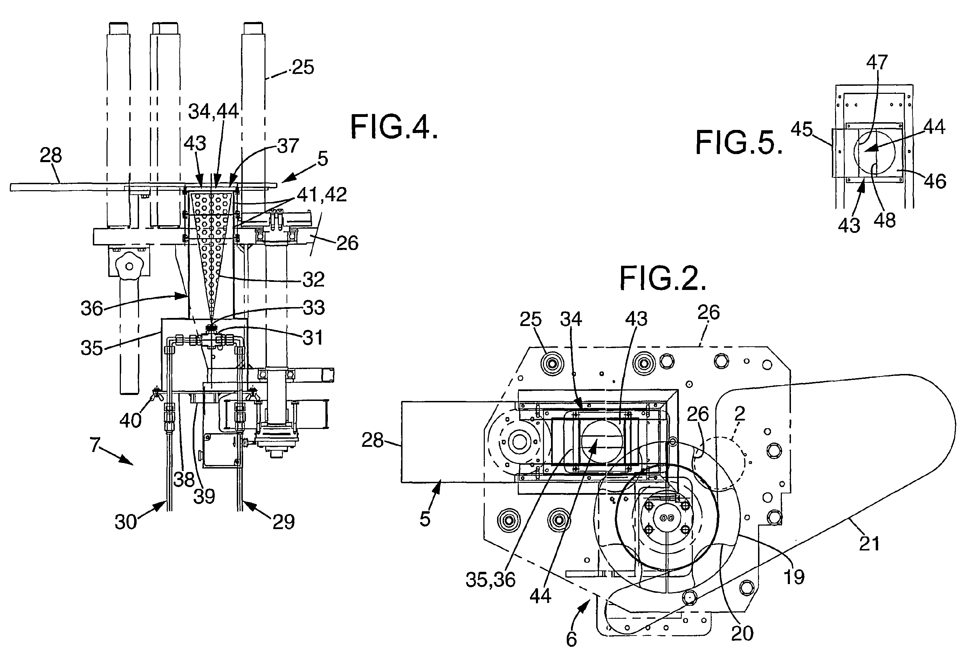

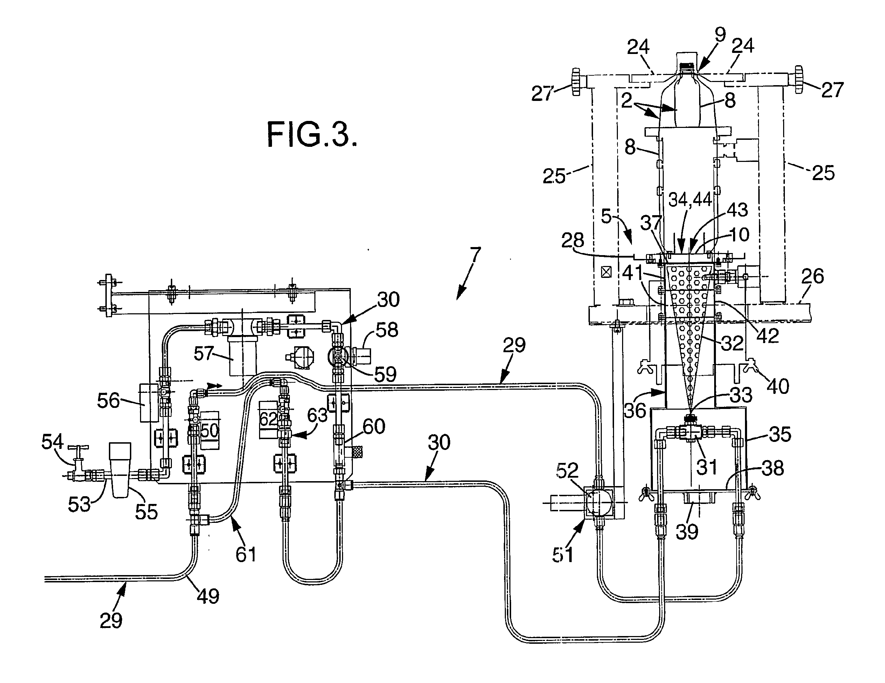

Les récipients 2 sont ensuite transférés, au moyen d'une roue 19 de transfert munie d'empreintes 20 (visibles sur la figure 2), depuis les moules du dispositif de soufflage vers le convoyeur 5 à la sortie 6 de l'unité de formage 3 où les récipients 2 sont refroidis avant d'être acheminés vers l'unité de remplissage 4.

La roue 19 de transfert est entraînée en rotation au moyen d'une courroie 21 de transmission reliée au carrousel 18 de manière à synchroniser la vitesse de rotation de la roue 19 et celle de défilement du carrousel 18.

Dans l'unité de remplissage 4, les récipients 2 sont disposés sur un dispositif 22 de remplissage à tambour tournant d'où, une fois remplis, ils sont extraits et présentés à un dispositif de bouchage 23. Les récipients 2 sont alors évacués vers une unité d'étiquetage puis une unité d'emballage (non représentées).

Comme cela est représenté sur la figure 3, le convoyeur comporte deux rails 24 en regard, auxquels les récipients 2 sont suspendus par leur col 9 et sur lesquels ils coulissent en se poussant les uns les autres sous l'impulsion de la roue 19 de transfert.

Les rails 24 sont soutenus par des pieds 25 cylindriques eux-mêmes portés par un châssis 26 qui forme la structure porteuse du convoyeur 5.

Afin de permettre le convoyage de récipients présentant des diamètres de cols 9 différents, les rails 24 sont montés coulissants transversalement sur leurs supports, leur écartement étant réglable au moyen de molettes 27.

Comme cela est visible sur la figure 2, le convoyeur 5 comporte, en sortie 6 de l'unité de formage 3, une plaque 28 de fond disposée sous et en regard du fond 10 des récipients 2. Les récipients 2 étant suspendus aux rails 24, ils ne reposent pas sur la plaque 28 de fond, dont le positionnement en hauteur (c'est-à-dire sa distance aux rails 24) est réglable, en fonction de la taille des récipients 2, de manière que l'interstice séparant la plaque 28 de fond du fond 10 des récipients 2 soit le plus faible possible.

Nous verrons dans ce qui suit comment est effectué ce réglage.

L'unité de refroidissement 7 comporte quant à elle un circuit 29 d'alimentation en gaz sous pression, typiquement de l'air, et un circuit 30 d'alimentation en liquide sous pression, typiquement de l'eau, tous deux raccordés à une buse 31 disposée sous la plaque 28 de fond, à une certaine distance de celle-ci, comme cela est représenté sur les figures 3 et 4.

Ainsi, lorsqu'elle est alimentée en air et en eau, la buse 31 génère un jet 32, composé d'un mélange d'air et d'eau en suspension, dirigé, à l'extérieur des récipients 2, vers leur fond 10 qui constitue ici une zone cible que l'on souhaite refroidir par l'extérieur, immédiatement après le formage des récipients 2.

La buse 31 présente un orifice 33 dirigé vers une ouverture 34 pratiquée dans la plaque 28 de fond en sortie 6 de l'unité de formage 3, ouverture au droit de laquelle défilent les fonds 10 des récipients 2.

Afin d'éviter que des projections de liquide n'atteignent des parties sensibles environnantes de l'installation 1, la buse 31 est placée dans un carter 35 qui confine le jet 32 et permet la récupération de l'eau condensée.

Le carter 35 comporte une paroi 36 latérale qui se termine par une extrémité supérieure 37 par laquelle le carter 35 est fixé à la plaque 28 de fond, la paroi 36, à section carrée sur l'exemple représenté, bordant l'ouverture 34.

Le carter 35 comporte, du côté opposé à son extrémité supérieure 37, un bac 38 de récupération de l'eau condensée qui s'écoule le long de la paroi 36 latérale. Comme cela est représenté sur la figure 4, le bac 38 présente un orifice 39 sur lequel peut être branché un tuyau (non représenté) pour l'évacuation de l'eau vers l'extérieur de l'installation 1.

Comme cela est en outre visible sur la figure 4, le bac 38 de récupération, qui ferme le carter 35 par le bas, est amovible pour permettre l'accès à la buse 31. En pratique, le bac 38 est monté sur la paroi 36 latérale au moyen d'écrous 40 à oreilles qui permettent un montage et un démontage rapide et sans outil du bac 38.

Compte tenu de l'adaptation de l'installation 1 à la fabrication de récipients 2 de tailles diverses, des moyens 41 sont prévus pour régler la distance séparant la buse 31 des fonds 10 des récipients 2, c'est-à-dire, en pratique, pour régler la distance séparant la buse 31 de la plaque de fond 28.

Comme illustré sur les figures 3 et 4, ces moyens 41 se présentent sous la forme d'au moins une entretoise rapportée qui vient se monter sur l'extrémité supérieure 37 du carter 35 en s'interposant entre celui-ci et la plaque 28 de fond qui se trouve ainsi surélevée, cette entretoise présentant une paroi 42 latérale qui prolonge alors la paroi 36 latérale du carter 35.

Il en résulte une modularité conjointe de l'unité de refroidissement 7 et du convoyeur 5 en fonction de la taille des récipients 2.

Comme cela est illustré sur la figure 4, la buse 31 est agencée pour générer un jet 32 de forme conique. Afin de localiser au mieux le jet 32 sur le fond 10 des récipients 2 à l'extérieur de ceux-ci et éviter autant que possible les projections d'eau au-delà de la plaque 28 de fond, l'unité de refroidissement 7 comporte un masque 43 qui, monté à l'extrémité supérieure 37 du carter 35 au droit de l'ouverture 34, délimite une fenêtre 44 de largeur réglable.

Le masque 43 comporte deux volets 45, 46 disposés dans un plan perpendiculaire à l'axe de la buse 31 (c'est-à-dire à la direction générale du jet 32), et qui présentent des bords internes 47, 48 délimitant conjointement la fenêtre 44. Comme cela est représenté sur la figure 5, l'un au moins des volets 45, 46 est monté coulissant pour permettre le réglage de la taille (plus exactement de la largeur) de la fenêtre 44 et ainsi réguler la section du jet 32 à en sortie du carter 35 en fonction notamment du diamètre du fond 10 des récipients 2.

La buse 31 est une buse d'atomisation : elle est agencée pour atomiser l'eau en gouttelettes fines, c'est-à-dire d'un diamètre inférieure à 200 µm, tandis que les buses classiques de brumisation génèrent des grosses gouttelettes d'eau, c'est-à-dire d'un diamètre supérieur à 400 µm.

Les inventeurs ont en effet constaté qu'au contact du plastique chaud, c'est-à-dire à une température supérieure ou égale à 80°C environ, les particules atomisées passent de manière quasi immédiate à l'état gazeux. C'est le transfert de chaleur accompagnant ce changement d'état liquide-gaz qui provoque le refroidissement des parties exposées des récipients 2 (en l'occurrence le fond 10).

Le transfert de chaleur accompagnant le changement d'état liquide-gaz étant plus important que celui accompagnant le simple réchauffement de l'eau (comme cela est le cas lors d'un refroidissement par brumisation), le refroidissement par projection d'un jet atomisé se révèle plus efficace que la brumisation.

Il résulte en outre des dispositions qui précèdent les avantages suivants.

Premièrement, la consommation d'eau est fortement réduite (le volume d'une gouttelette d'un diamètre de 200 µm représente en effet le huitième du volume d'une gouttelette d'un diamètre de 400 µm).

Deuxièmement, on observe une diminution considérable des salissures sur les corps 8 des récipients 2. En effet, alors que des grosses gouttelettes qui viennent se déposer sur les corps 8 y laissent en coulant des traces qu'il est ensuite nécessaire de faire disparaître, les fines gouttelettes n'ont pas l'opportunité de se déposer sur les corps 8, soit qu'elles aient été vaporisées au contact du fond 10 chaud, soit qu'elles aient été stoppées par le masque. On améliore ainsi la propreté des récipients.

Troisièmement, la vaporisation des fines gouttelettes évite la pollution de l'installation 1, c'est-à-dire la projection d'eau sur les parties environnantes de l'installation 1, qui pourrait notamment avoir des conséquences néfastes en termes de sécurité électrique. La cartérisation de la buse 31 contribue également à diminuer cette pollution.

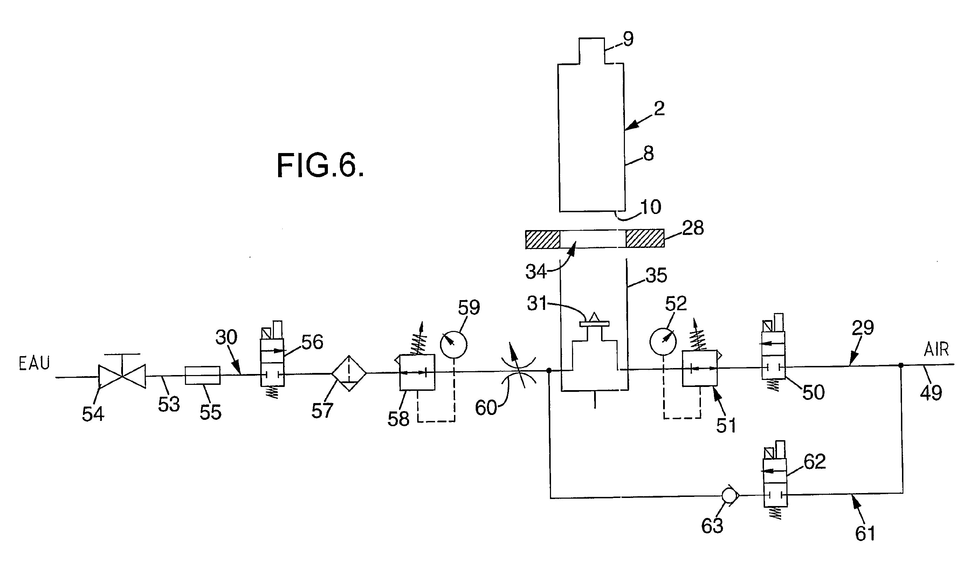

On décrit à présent l'agencement et l'équipement des circuits 29, 30 d'alimentation an air et en eau sous pression, en référence aux figures 3 et 6.

Le circuit 29 d'alimentation en air comporte une canalisation 49 d'amenée de l'air, raccordée à un circuit général d'air sous pression (non représenté ; dans l'industrie, la pression d'air relative dans le circuit général est généralement égale à 7 bars).

Il est à noter que, par pression d'air « relative », on entend la différence de pression entre la pression d'air mesurée et la pression atmosphérique.

La canalisation 49 d'amenée de l'air est raccordée à une première électrovanne 50 commandée par un automate (non représenté), la fermeture du circuit 29 étant commandée lorsque l'installation 1 est à l'arrêt, et son ouverture lorsqu'elle fonctionne.

Sur le circuit 29 d'alimentation de l'air est ensuite placé, entre l'électrovanne 50 et la buse 31, un régulateur 51 de pression (en l'occurrence un détendeur) agencé pour qu'à sa sortie la pression d'air relative soit inférieure à 1 bar environ, et de préférence égale à 0,7 bar environ. Un manomètre 52 (à aiguille ou numérique) est adjoint au régulateur 51.

Le circuit d'eau 30 comporte quant à lui une canalisation 53 d'amenée de l'eau raccordée au circuit général d'alimentation en eau (non représenté), en l'occurrence par l'intermédiaire d'un robinet 54 à commande manuelle.

Entre le robinet 54 et la buse 31, l'eau rencontre, le long du circuit :
- un premier filtre antitartre 55, du type électromagnétique, destiné à opérer un premier adoucissement de l'eau en retenant les particules d'un diamètre supérieur à 7 µm ;
- une seconde électrovanne 56 commandée par l'automate évoqué ci-dessus, la fermeture du circuit 30 étant commandée lorsque l'installation 1 est à l'arrêt, et son ouverture au contraire lorsque celle-ci est en fonctionnement ;
- un second filtre antitartre 57, destiné à opérer un second adoucissement de l'eau en retenant les particules d'un diamètre supérieur à 5 µm ;
- un régulateur 58 de pression auquel est adjoint un manomètre 59, et
- un limiteur 60 de débit.

Le régulateur 58 de pression et le limiteur 59 de débit sont respectivement réglés pour que la pression relative d'eau soit inférieure à 1 bar (de préférence égale à 0,7 bar environ), et pour que le débit d'eau soit inférieur à 3 1/h.

En effet, les inventeurs ont constaté, pour ces valeurs, conjuguées avec une pression d'air relative inférieure à 1 bar, une efficacité maximale de l'unité de refroidissement.

En outre, afin d'assurer la purge de la buse 31 du côté de l'arrivée d'eau pour éviter son entartrage notamment en cas d'arrêt prolongé de l'installation 1, le circuit 29 d'alimentation en air est raccordé au circuit 30 d'alimentation en eau au moyen d'un circuit 61 de dérivation branché, d'une part sur le circuit 29 d'alimentation en air en amont de la première électrovanne 50, et d'autre part sur le circuit 30 d'alimentation en eau entre le limiteur 60 de débit et la buse 31.

Le circuit 61 de dérivation comporte, successivement, une troisième électrovanne 62 commandée par l'automate lorsque la purge est jugée nécessaire, et un clapet 63 anti-retour destiné à éviter la remontée d'eau dans le circuit 29 d'alimentation en air.

Le fonctionnement de l'installation 1 est le suivant.

Les préformes sont d'abord introduites dans l'unité de formage 3 par l'unité d'alimentation 11. Au sein de l'unité de formage 3, les récipients 2 sont formés à partir des préformes. Les récipients 2 chauds sont ensuite transférés par la roue 19, en sortie 6 de l'unité de formage 3, vers le convoyeur 5.

Les récipients 2 passent alors au droit de l'ouverture 34, leur fond 10 étant frappé par le jet 32 en provenance de la buse 31, et conséquemment refroidi par le transfert de chaleur accompagnant le passage de l'état liquide des particules d'eau atomisée à l'état gazeux.

L'invention ne saurait être limitée à la description qui précède, des variantes pouvant être envisagées.

Ainsi, bien que la buse 31 soit alimentée en continu, il est envisageable de programmer l'automate de manière à générer le jet 32 de manière intermittente, dès lors qu'un récipient 2 se présente au droit de la fenêtre 44, afin d'économiser l'eau et éviter les projections liquides au travers de l'interstice séparant deux récipients 2 consécutifs.

Par ailleurs, bien que l'unité de refroidissement 7 soit fixe dans ce qui précède, il est envisageable de la monter sur un chariot coulissant accompagnant les récipients 2 sur une partie de leur trajet le long du convoyeur 5, afin de refroidir plus encore les fonds 10.

Il est également envisageable de placer la buse 31 au droit de la roue 19 de transfert ou, plus exactement, au droit du trajet des empreintes 20, afin que le refroidissement des récipients 2 soit opéré, pendant leur transfert vers le convoyeur 5, avant même la sortie de l'unité de formage 3. Une telle disposition n'appelle pas de modification particulière de la structure même de l'unité de refroidissement 7.

De plus, bien que, dans ce qui précède, la zone à refroidir (« zone cible ») comprenne le fond 10 des récipients 2, il est envisageable de choisir une autre zone cible, en fonction de la forme des récipients. Il peut par exemple s'agir, sur le corps 8, de zones munies de raidisseurs, où le profil et/ou l'épaisseur de la paroi varient localement.

En outre, il est bien entendu possible de remplacer l'air par tout autre gaz inerte (par exemple de l'azote), et l'eau par tout autre liquide, de préférence non corrosif et non polluant.

Quant au masque 43, bien qu'étant réalisé au moyen de volets 45, 46 coulissants, il est envisageable de remplacer ces volets 45, 46 par un diaphragme contractile.

## Revendications

1. Procédé de fabrication de récipients (2), qui comporte :
- une étape de formage dans un moule, à partir de préformes en matière thermoplastique préalablement chauffées, de récipients (2) comportant un corps (8) et un fond (10), puis
- une étape de refroidissement des récipients (2) formés sortis du moule,
**caractérisé en ce que**, dans l'étape de refroidissement, on projette, de manière localisée sur une zone cible comprenant le fond (10) des récipients (2) située sur l'extérieur des récipients (2) formés, un jet (32) d'un fluide de refroidissement composé d'un mélange d'un gaz et d'un liquide atomisé, tous deux à une pression relative inférieure à 1 bar environ.

2. Procédé selon la revendication 1, dans lequel la pression relative du gaz est égale à 0,7 bar environ.

3. Procédé selon la revendication 1 ou 2, dans lequel la pression relative du liquide est égale à 0,7 bar environ.

4. Procédé selon l'une des revendications 1 à 3, dans lequel le gaz est de l'air.

5. Procédé selon l'une des revendications 1 à 4, dans lequel le liquide est de l'eau.

6. Installation (1) de fabrication de récipients (2), qui comporte :
- une unité de formage (3) pour mettre en forme les récipients (2) par formage dans un moule à partir de préformes en matière thermoplastique, et
- une unité de refroidissement (7) des récipients (2) formés sortis du moule,
ladite installation (1) étant **caractérisée en ce que** l'unité de refroidissement (7) comporte :
- un circuit (29) d'alimentation en gaz sous pression,
- un circuit (30) d'alimentation en liquide sous pression, et
- une buse (31) d'atomisation à laquelle sont raccordées lesdits circuits (29, 30), cette buse (31) étant agencée pour projeter, de manière localisée sur une zone cible comprenant le fond (10) des récipients (2) située sur l'extérieur des récipients (2) formés, un jet (32) d'un fluide de refroidissement composé d'un mélange de gaz et de liquide atomisé, tous deux à une pression relative inférieure à 1 bar environ.

7. Installation (1) selon la revendication 6, dont le circuit d'alimentation en gaz comprend un régulateur (51) de la pression du gaz.

8. Installation (1) selon la revendication 6 ou 7, dont le circuit (30) d'alimentation en liquide comprend un régulateur (58) de la pression du liquide.

9. Installation (1) selon l'une des revendications 6 à 8, dont l'unité de refroidissement (7) comporte un carter (35) dans lequel est placée la buse (31) d'atomisation, ledit carter (35) présentant une extrémité supérieure (37) délimitant une ouverture (34) vers laquelle est dirigée la buse (31), cette ouverture (34) étant placée au droit du trajet des récipients. (2).

10. Installation (1) selon la revendication 9, qui comporte des moyens (41) de réglage de la distance séparant ladite ouverture (34) de la buse (31).

11. Installation (1) selon la revendication 10, dans laquelle lesdits moyens (41) de réglage se présentent sous la forme d'au moins une entretoise pouvant être montée à l'extrémité supérieure (37) du carter (35).

12. Installation (1) selon l'une des revendications 9 à 11, dans laquelle ledit carter (35) comporte, à l'opposé de ladite ouverture (34), un bac (38) de récupération du liquide.

13. Installation (1) selon l'une des revendications 6 à 12, dont l'unité de refroidissement (7) comporte un masque (43) placé en regard de la buse' (31) sur le trajet du jet (32) généré par celle-ci, ledit masque (43) délimitant une fenêtre (44) placée au droit du trajet des récipients (2).

14. Installation (1) selon la revendication 13, dans lequel ledit masque (43) comporte deux volets (45, 46) délimitant ladite fenêtre (44), l'un au moins des volets (45, 46) étant mobile pour régler la largeur de la fenêtre (44).

15. Installation (1) selon la revendication 13 ou 14, prise conjointement avec l'une des revendications 9 à 12, dans lequel le masque (43) est monté à l'extrémité supérieure (37) dudit carter (35).

## Claims

1. A method for the production of containers (2), which comprises:
- a forming step to form in a mold, starting from preheated thermoplastic preforms, containers (2) comprising a body (8) and a base (10), then
- a cooling step to cool the formed containers (2) coming off the mold,
**characterized in that**, in the cooling step, a jet (32) of a cooling fluid composed of a mixture of a gas and of an atomized liquid, both at a relative pressure of less than approximately 1 bar, is sprayed in a localized manner over a target area, including the container bottom (10), located on the outer of the formed containers (2).

2. The method as claimed in claim 1, in which the relative pressure of the gas is equal to approximately 0.7 bar.

3. The method as claimed in claim 1 or 2, in which the relative pressure of the liquid is equal to approximately 0.7 bar.

4. The method as claimed in one of claims 1 to 3, in which the gas is air.

5. The method as claimed in one of claims 1 to 4, in which the liquid is water.

6. An installation (1) for the production of containers (2), which comprises:
- a forming unit (3) for shaping the containers (2) by forming in a mold from thermoplastic preforms, and
- a cooling unit (7) for cooling the formed containers (2) coming off the mold,
said installation (1) being **characterized in that** the cooling unit (7) comprises:
- a pressurized-gas supply circuit (29),
- a pressured-liquid supply circuit (30), and
- an atomizing nozzle (31) to which said circuits (29, 30) are connected, this nozzle (31) being designed to spray, in a localized manner over a target area, including the container bottom (10), located on the outer of the formed containers (2), a jet (32) of a cooling fluid composed of a mixture of gas and of atomized liquid, both at a relative pressure of less than approximately 1 bar.

7. The installation (1) as claimed in claim 6, the gas supply circuit of which comprises a gas pressure regulator (51).

8. The installation (1) as claimed in claim 6 or 7, the liquid supply circuit (30) of which comprises a liquid pressure regulator (58).

9. The installation (1) as claimed in one of claims 6 to 8, the cooling unit (7) of which comprises a casing (35) in which the atomizing nozzle (31) is placed, said casing (35) having an upper end (37) defining an opening (34) toward which the nozzle (31) is directed, this opening (34) being placed perpendicularly to the path of the containers (2).

10. The installation (1) as claimed in claim 9, which comprises adjustment means (41) to adjust the distance separating said opening (34) from the nozzle (31).

11. The installation (1) as claimed in claim 10, in which said adjustment means (41) are designed as at least one spacer which can be mounted at the upper end (37) of the casing (35).

12. The installation (1) as claimed in one of claims 9 to 11, in which said casing (35) comprises, at the opposite end to said opening (34), a receptacle (38) for recovering the liquid.

13. The installation (1) as claimed in one of claims 6 to 12, the cooling unit (7) of which comprises a mask (43) placed so as to face the nozzle (31) along the path of the jet (32) sprayed by this nozzle, said mask (43) defining a window (44) placed at the path of the containers (2).

14. The installation (1) as claimed in claim 13, in which said mask (43) comprises two shutters (45, 46) defining said window (44), at least one of the shutters (45, 46) being able to move in order to adjust the width of the window (44).

15. The installation (1) as claimed in claim 13 or 14, taken jointly with one of claims 9 to 12, in which the mask (43) is mounted at the upper end (37) of said casing (35).

## Patentansprüche

1. Verfahren zum Herstellen von Behältern (2), umfassend:
- einen Schritt des Bildens von einen Körper (8) und einen Boden (10) umfassenden Behältern (2) in einer Form, ausgehend von zuvor erhitzten Vorformen aus thermoplastischem Material, dann
- einen Schritt des Abkühlens der geformten, aus der Form kommenden Behälter (2),
**dadurch gekennzeichnet, dass** im Abkühlschritt ein Kühlflüssigkeitsstrahl (32) bestehend aus einem Gemisch aus einem Gas und einer atomisierten Flüssigkeit, welche beide einen relativen Druck von unter ungefähr 1 bar aufweisen, in einer lokalisierten Weise auf einen den Boden (10) der Behälter (2) umfassenden Zielbereich aufgebracht wird, welcher sich auf dem Äußeren der gebildeten Behälter (2) befindet.

2. Verfahren nach Anspruch 1, bei dem der relative Druck des Gases gleich ungefähr 0,7 bar ist.

3. Verfahren nach Anspruch 1 oder 2, bei dem der relative Druck der Flüssigkeit gleich ungefähr 0,7 bar ist.

4. Verfahren nach einem der Ansprüche 1 bis 3, bei dem es sich bei dem Gas um Luft handelt.

5. Verfahren nach einem der Ansprüche 1 bis 4, bei dem es sich bei der Flüssigkeit um Wasser handelt.

6. Vorrichtung (1) zum Herstellen von Behältern (2), umfassend:
- eine Formeinheit (3), um die Behälter (2) durch Formen in einer Form ausgehend von Vorformen aus thermoplastischem Material in Form zu bringen; und
- eine Einheit zum Kühlen (7) der geformten, aus der Form kommenden Behälter (2),
wobei die Vorrichtung (1) **dadurch gekennzeichnet ist, dass** die Kühleinheit (7) Folgendes umfasst:
- einen Kreislauf (29) zum Zuführen von unter Druck stehendem Gas;
- einen Kreislauf (30) zum Zuführen von unter Druck stehender Flüssigkeit; und
- eine Atomisierungsdüse (31), an die die Kreisläufe (29, 30) angeschlossen sind, wobei die Düse (31) dazu ausgelegt ist, einen Kühlflüssigkeitsstrahl (32) eines Gemischs bestehend aus Gas und atomisierter Flüssigkeit, welche beide einen relativen Druck von unter ungefähr 1 bar aufweisen, in einer lokalisierten Weise auf einen den Boden (10) der Behälter (2) umfassenden Zielbereich aufzubringen, welcher sich auf dem Äußeren der gebildeten Behälter (2) befindet.

7. Vorrichtung (1) nach Anspruch 6, wobei der Kreislauf zum Zuführen von Gas einen Regulator (51) des Gasdrucks umfasst.

8. Vorrichtung (1) nach Anspruch 6 oder 7, wobei der Kreislauf (30) zum Zuführen von Flüssigkeit einen Regulator (58) des Flüssigkeitsdrucks umfasst.

9. Vorrichtung (1) nach einem der Ansprüche 6 bis 8, wobei die Kühleinheit (7) ein Gehäuse (35) umfasst, in dem die Atomisierungsdüse (31) angeordnet ist, wobei das Gehäuse (35) ein oberes Ende (37), welches eine Öffnung (34) begrenzt, auf die die Düse (31) gerichtet ist, aufweist, wobei diese Öffnung (34) rechts von der Bahn der Behälter (2) angeordnet ist.

10. Vorrichtung (1) nach Anspruch 9, welche Mittel (41) zum Einstellen des Abstands zwischen der Öffnung (34) und der Düse (31) umfasst.

11. Vorrichtung (1) nach Anspruch 10, wobei die Mittel (41) zum Einstellen die Form von mindestens einem Abstandshalter aufweisen, welcher am oberen Ende (37) des Gehäuses (35) angebracht werden kann.

12. Vorrichtung (1) nach einem der Ansprüche 9 bis 11, bei der das Gehäuse (35) gegenüber der Öffnung (34) einen Behälter (38) zur Wiedergewinnung der Flüssigkeit umfasst.

13. Vorrichtung (1) nach einem der Ansprüche 6 bis 12, bei der die Kühleinheit (7) eine bezüglich der Düse (31) in der Bahn des durch sie erzeugten Strahls (31) angeordnete Maske (43) aufweist, wobei die Maske (43) ein Fenster (44) begrenzt, welches rechts von der Bahn der Behälter (2) angeordnet ist.

14. Vorrichtung (1) nach Anspruch 13, bei der die Maske (43) zwei Klappen (45, 46) umfasst, die das Fenster (44) begrenzen, wobei mindestens eine der Klappen (45, 46) beweglich ist, um die Breite des Fensters (44) einzustellen.

15. Vorrichtung (1) nach Anspruch 13 oder 14, im Verbund mit einem der Ansprüche 9 bis 12, bei der die Maske (43) am oberen Ende (37) des Gehäuses (35) montiert ist.
